# EUROPEAN PATENT APPLICATION

(11) **EP 2 153 946 A1**
(43) Date of publication of application: **17.02.2010**
(21) Application number: 09167322.8
(22) Date of filing: 06.08.2009
(51) Int. Cl.: B25J 1/06, B25J 9/06, B25J 9/10

(54) **Multiple articulation arm**

(30) Priority: 07.08.2008 ES 200802376
(71) Applicant: Pepiol Espallargas, Francisco Andres, 085630 La Garriga (ES)
(72) Inventor: Pepiol Espallargas, Francisco Andres, 08530 La Garriga (ES); Casals Gespí, Alicia, 08034 Barcelona (ES); Amat Girbau, Josep, 08034 Barcelona (ES); Aranda López, Juan, 08034 Barcelona (ES)
(74) Representative: Ponti Sales, Adelaida

(57) **Abstract**

The invention relates to a multi-articulated arm (1) in one plane (2), which comprises a first element (3), a second element (4) and a third element (5) successively articulated by joints (6), which define its longitudinal direction (7), wherein the first element (3) and the third element (5) are inter-articulated by a rod (8) through two joints (9, 10) positioned each one adjacent to the joint (6) of each one of said elements with the second element (4) and in direction perpendicular to the longitudinal direction (7) the first (3) and third (5) elements and said two joints (6) being positioned in opposite sides of the arm (1), which provides a kinematics especially suitable for holding and moving tools or implements in a working environment due to a curved an arc-shaped geometric configuration of variable radius of curvature.

## Description

The present invention relates to a robotic multi-articulated arm whose kinematics is especially suitable for holding and displacing tools or implements in a working environment, **characterized in that** it acquires an arc-shaped geometric configuration of variable radius of curvature.

### BACKGROUND OF THE INVENTION

Multi-articulated arms are known designed to hold and displace tools or utensils held at one of their ends. In general, these arms comprise a plurality of concatenated elements which allow the positioning of its end.

Among the most widely used architectures we can highlight the architectures called classic, which are: those based on articulated elements which generate displacements, which gives rise to robots with Cartesian coordinates; mixed architectures, based on articulated elements in the form of displacements and in the form of rotations, which give rise to architectures with polar or cylindrical coordinates; or architectures based on the rotations of their joints and which give rise to architectures of angular coordinates.

Among architectures called non-classic, we can highlight the elephant's trunk, consisting of the concatenation of a certain number of elements and, therefore, of rotations, in the same plane, and the Stewart platform, consisting of a support with six degrees of freedom.

Furthermore, there are kinematic chains called subactuated, which are actuated by a single actuator, among which we can cite fingers with phalanges equipped with a single control, used in some robotic hands, and the extendable arms of crossbow type.

One of the advantages represented by being able to have subactuated multi-articulated kinematic chains is being able to obtain a greater displacement capacity not performing rotations or displacements, which in many cases condition the accessibility, but managing to bend its architecture.

Since said kinematic chains or multi-articulated arms have limitations from the standpoint of the curvature of the arm and of the space they occupy during their use, the applicant proposes a multi-articulated arm in the following description whose kinematics makes it possible to overcome said problems.

### DESCRIPTION OF THE INVENTION

The present invention relates to a multi-articulated arm in one plane, which comprises at least a first element, a second element and a third element successively articulated by joints, said joints of each element defining its longitudinal direction, which is **characterized in that** the first element and the third element are inter-articulated by a rod through two joints positioned each one adjacent to the joint of each one of said elements with the second element and in a direction appreciably perpendicular to the longitudinal direction of each one of said first element and third element and said two joints being positioned in opposite sides of the arm.

These characteristics give the arm a kinematic especially adapted to be used as displaceable support from a roof or from a support above the operator, or from a fixed or displaceable base on the floor.

Specifically, achieving a controllable curvature radius, which is less than that of the elbows of classic robot joints, makes it possible to better adapt to many environments and, therefore, achieve a better manoeuvrability.

Preferably, each one of the elements is formed by a central segment at the ends whereof two segments are joined perpendicular to the central segment and positioned on both sides thereof, a form which gives it a predictable kinematics suitable for the curvatures which are pursued with the invention.

Advantageously, the elements are identical and concatenable, so that their construction and assembly is facilitated, and it is also given the desired variation of curvature.

Even more preferably, each element is composed of two parallel and separate profiles, so that their rigidity is increased with the same weight and it is also possible to dispose the pipes or cables to control or supply the tools disposed at the end.

Finally, each element is composed of two parallel bars joined at their ends by two pieces equipped with orifices for the different joints.

### BRIEF DESCRIPTION OF THE DRAWINGS

For a better understanding of the aforementioned drawings are attached wherein, schematically and only in the case of non-limitative example, two practical cases of embodiment are represented.
Figure 1 is a schematic elevation view of the multi-articulated arm object of the invention when it is not curved.
Figure 2 is a schematic elevation view of the multi-articulated arm object of the invention when it is curved.
Figure 3 is a perspective view of a preferred embodiment of one of the elements composing the multi-articulated arm.
Figure 4 is a perspective view of a multi-articulated arm made with elements according to figure 3 and equipped with means to orientate the plane of the arm.

### DESCRIPTION OF PREFERRED EMBODIMENTS

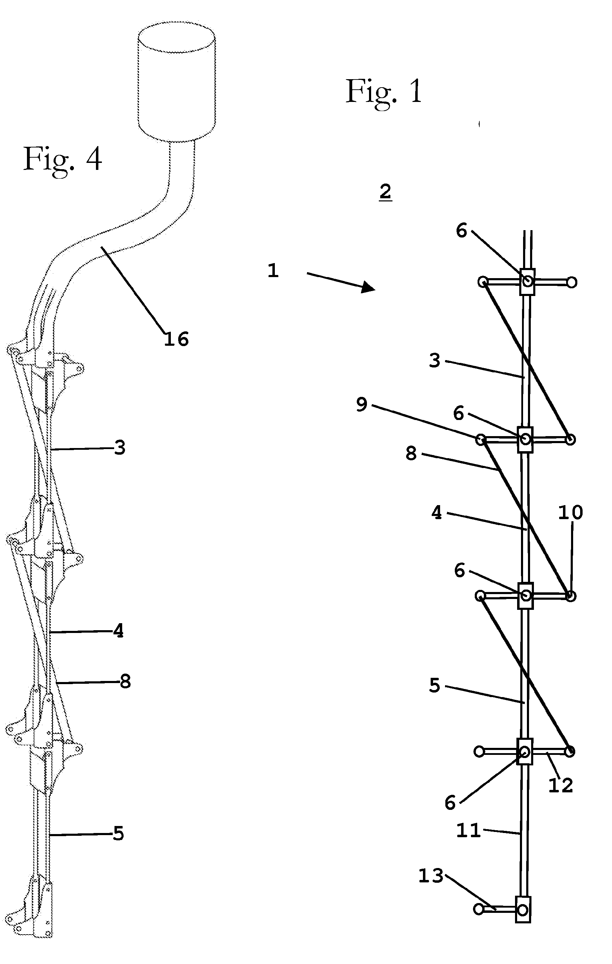

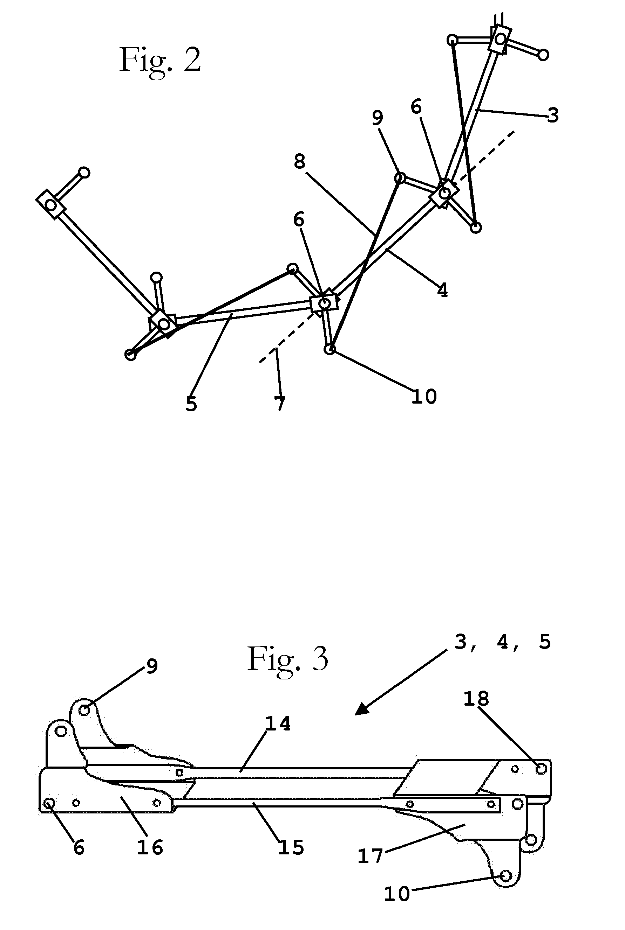

As schematized in figures 1 and 2, the invention relates to a multi-articulated arm 1 in one plane 2, which comprises at least a first element, a second element 4 and a third element 5 successively articulated by joints 6, said joints 6 of each element defining its longitudinal direction 7, represented in broken lines.

Specifically, in the arm of the invention the first element 3 and the third element 5 of the chain formed are inter-articulated by a rod 8 through two joints 9, 10. These joints are positioned each one adjacent to the joint 6 of each one of said elements with the second element 4 and in a direction appreciably perpendicular to the longitudinal direction 7 of each one of said alternate elements 3 and 5 and said two joints 6 being positioned in opposite sides of the arm 1.

Therefore, the general structure of the arm is a succession of elements articulated according to parallel axes, so that the movement of the arm is performed on one plane, but it has the special characteristics that the pairs of elements separated by another element are inter-articulated through said rod. In this way, it is possible to control its curvature from one of the ends of the arm, and therefore, the position of the end of the arm. In a crossbow type arm, the movement of the end is limited to a linear displacement. This is not the case in that of the invention.

On the other hand, finger-type joints have the drawback that they are actuated by cables, which involves a complex transmission system.

Figure 1 shows a preferred embodiment of the multi-articulated arm wherein each one of the elements 3, 4, 5 is formed by a central segment 11 at the ends whereof are joined two segments 12, 13 perpendicular to the central segment and positioned on both sides thereof.

Likewise, as can be observed in figures 1, 2 and 4, elements 3, 4, 5 are identical and concatenable.

Concatenable is understood to mean that the structure of each element allows it to be articulated with an identical element. This implies that the ends of two elements designed to be articulated are different to allow their fitting in, as illustrated, for example, in figure 3.

According to another preferred embodiment of the invention, each element 3, 4, 5 is composed of two parallel and separate profiles 14, 15, so that it is possible to channel and protect through the resulting space the supply and control pipes and cables or the tools disposed at the end of the arm. In a specific embodiment of the arm, each element is composed of two parallel bars 14, 15 joined at their ends by two pieces 16, 17 equipped with orifices 18 for the different joints.

The arm of the invention is therefore devised to hold tools from a soffit or a support positioned above the operator and on a fixed or moving base on the floor.

For example, in a surgery it can be used to hold medical instrumentation available for the medical staff or to hold the instruments used in hairdressing. In this last case, for example the hot air pipe can be made to pass through the spaces between the pieces that form each element, so that the pipe is protected, or laterally on the structure.

Effectively, in these cases minimum occupation of space is sought by the arm, and it has been experimentally verified that the arm of the invention provides comfortably displacements for the operators.

Preferably, as illustrated in figure 4, the arm can be maintained with one of its ends disposed on an element 16 mounted in rotation according to an axis, which is preferably vertical. This configuration allows the user to orientate the plane of movement of the end of the arm, in other words, it gives it a second degree of freedom.

Likewise, if it is desired to give it a third degree of freedom, a third degree of freedom can be given to the gyratory support of the arm end, for example, allowing its vertical movement.

The action of the arm can be achieved, therefore, with motors disposed at the end of the arm. One of them shall control the curve of the arm and the other the rotation of the working plane. Likewise, it is possible to add a guide and a third motor to displace the assembly in vertical direction.

On the other hand, it can be controlled by pressure sensors which detect the pressure exerted by the user or operator, so that the end of the arm is positioned in the desired point without effort and by the motors.

## Claims

1. Multi-articulated arm (1) in one plane (2), which comprises at least a first element (3), a second element (4) and a third element (5) successively articulated by joints (6), said joints (6) of each element defining its longitudinal direction (7), **characterized in that** the first element (3) and the third element (5) are inter-articulated by a rod (8) through two joints (9, 10) positioned each one adjacent to the joint (6) of each one of said elements with the second element (4) and in a direction appreciably perpendicular to the longitudinal direction (7) of each one of said first element (3) and third element (5) and said two joints (6) being positioned in opposite sides of the arm (1).

2. Multi-articulated arm according to claim 1, **characterized in that** each one of the elements (3, 4, 5) is formed by a central segment (11) at the ends whereof are joined two segments (12, 13) perpendicular to the central segment and positioned on both sides thereof.

3. Multi-articulated arm according to claim 1, **characterized in that** said elements (3, 4, 5) are identical and concatenable.

4. Multi-articulated arm according to claim 1, **characterized in that** each element (3, 4, 5) is composed of two parallel and separate profiles (14, 15).

5. Multi-articulated arm according to the preceding claim, **characterized in that** each element is composed of two parallel bars (14, 15) joined at their ends by two pieces (16, 17) equipped with orifices (18) for the different joints.
